# EUROPÄISCHE PATENTANMELDUNG

(11) **EP 1 191 256 A2**
(43) Veröffentlichungstag der Anmeldung: **27.03.2002**
(21) Anmeldenummer: 01119567.4
(22) Anmeldetag: 16.08.2001
(51) Int. Cl.: F16H 55/12

(54) **Anlasserrad für ein Kraftfahrzeug oder dergleichen**

(30) Priorität: 23.09.2000 DE 10047242
(71) Anmelder: Winkelmann & Pannhoff GmbH & Co. KG, Umformtechnik, 59227 Ahlen (DE)
(72) Erfinder: Hahlbrock, Hartwig, 59229 Ahlen (DE); Speck, Jürgen, 59227 Ahlen (DE)
(74) Vertreter: Patentanwälte Meinke, Dabringhaus und Partner

(57) **Zusammenfassung**

Ein Anlasserrad für ein Kraftfahrzeug oder dgl., welches drehfest mit einer Motorwelle verbunden ist, bestehend aus einem Anlasserelement, welchem ein äußerer Zahnkranz zugeordnet ist, und einem Mitnehmerelement, das einerseits mit dem Anlasserelement und andererseits mit einem Wandler eines Automatikgetriebes verbunden ist, soll so verbessert werden, dass es ohne Beeinträchtigung der Funktionsfähigkeit radiale und vor allem axiale Kräfte aufnehmen kann.

Dies wird dadurch erreicht, dass das Mitnehmerelement (4) angrenzend an den Anlasserzahnkranz (3) im Bereich der Verbindungselemente (7,8) mit dem Wandler in axialer Richtung ausgebuchtete, schwingenförmige Bereiche (9) aufweist.

## Beschreibung

Die Erfindung betrifft ein Anlasserrad für ein Kraftfahrzeug oder dgl., welches drehfest mit einer Motorwelle verbunden ist, bestehend aus einem Anlasserelement, welchem ein äußerer Zahnkranz zugeordnet ist, und einem Mitnehmerelement, das einerseits mit dem Anlasserelement und andererseits mit einem Wandler eines Automatikgetriebes verbunden ist.

Anlasserräder dieser Art dienen dazu, einerseits den Kraftfahrzeugmotor zu starten und andererseits die Antriebskraft vom Motor über den Wandler zum Getriebe zu übertragen. Dabei ist das Mitnehmerelement im Bereich der Öffnung zur Befestigung am Wandler nach außen hin gewölbt ausgebildet, derart, dass im Einbauzustand gewisse axiale und radiale Kräfte aufgenommen werden können. Das Mitnehmerelement wird zunächst als Einzelteil hergestellt und erst bei der Montage des Fahrzeuges an der Anlasserscheibe befestigt. Nachteilig bei einem solchen Anlasserrad ist ein hoher Montageaufwand bei der Fahrzeugmontage. Darüber hinaus bedingt die Ausbildung des Mitnehmerringes einen relativ großen Raumbedarf, was ebenfalls von Nachteil ist.

Ein gattungsgemäßes Anlasserrad ist aus DE 42 11 472 C2 der Anmelderin bekannt. Dieses bekannte Anlasserrad weist eine Anlasserscheibe mit Nabe und ein drehfest mit der Anlasserscheibe verbundenes Mitnehmerelement mit Verbindungsmitteln zur drehfesten Verbindung mit einem Wandler des Automatikgetriebes auf, wobei das Mitnehmerelement als Ring ausgebildet ist, welcher an der Anlasserscheibe befestigt ist. Dabei ist das Mitnehmerelement im Bereich der Verbindungsmittel zur Verbindung mit dem Wandler ausgebuchtet und greift mit diesen Ausbuchtungen in entsprechend angeordnete, in der Anlasserscheibe ausgesparte Fensteröffnungen bzw. Vertiefungen ein. Durch diese indirekte Kraftübertragung vom Motor zur Nabe der Anlasserscheibe und von der Nabe auf den aufgesetzten Mitnehmerring sowie anschließend vom Ring auf den Wandler des Automatikgetriebes wird gegenüber anderen Anlasserrädern zwar eine bessere axiale und radiale Biegewechselfestigkeit erreicht, da sich radiale und auch axiale Bewegungen im wesentlichen nur im Bereich der Ausbuchtungen des Mitnehmerringes auswirken, allerdings reicht diese Biegewechselfestigkeit in bestimmten Einsatzbereichen noch nicht aus.

Aufgabe der Erfindung ist es deshalb, ein gattungsgemäßes Anlasserrad so zu verbessern, dass es ohne Beeinträchtigung der Funktionsfähigkeit radiale und vor allem axiale Kräfte aufnehmen kann.

Diese Aufgabe wird bei einem Anlasserrad der eingangs bezeichneten Art erfindungsgemäß dadurch gelöst, dass das Mitnehmerelement angrenzend an den Anlasserzahnkranz im Bereich der Verbindungselemente mit dem Wandler in axialer Richtung ausgebuchtete, schwingenförmige Bereiche aufweist.

Das Anlasserrad ist somit fest über seinen Nabenbereich an der Motorwelle befestigt, die Verbindung zum Wandler über das Mitnehmerelement erfolgt dagegen über in axialer Richtung ausgebuchtete schwingenförmige Bereiche, welche aufgrund der schwingenförmigen Ausbildung sowohl eine radiale als auch vor allem eine axiale Flexibilität ermöglichen, so dass radiale und axiale Kräfte aufgenommen werden können. Je nach Ausbildung der schwingenförmigen Bereiche läßt sich dabei die gewünschte Vorspannung bzw. Federkennlinie gezielt beeinflussen.

Nach einer ersten Ausgestaltung ist vorgesehen, dass das ringförmige Anlasserelement und die Mitnehmerscheibe als Verbindungsmittel Befestigungsöffnungen zur gemeinsamen Befestigung am Wandler aufweisen. Bei dieser Ausgestaltung besteht das Anlasserrad somit aus zwei Bauteilen, die im Bereich der Befestigungsöffnungen miteinander verbunden sind.

Um bei dieser Ausgestaltung die Montage des Anlasserrades am Fahrzeug zu erleichtern, ist besonders vorteilhaft vorgesehen, dass das Anlasserelement und die Mitnehmerscheibe im Bereich der Befestigungsöffnungen aneinander fixiert sind. Dies kann auf verschiedene Weise erreicht werden, beispielsweise kann der Bohrungsrand der Befestigungsöffnungen an der Mitnehmerscheibe in die entsprechenden Befestigungsöffnungen am Anlasserelement hinein umgeformt werden. Es steht dann zur Montage am Fahrzeug ein einteiliges Bauteil zur Verfügung.

Bei einer alternativen Ausgestaltung ist vorgesehen, dass das Anlasserelement als integraler Bestandteil des Mitnehmerelementes, also einteilig mit diesem, ausgebildet ist. Die schwingenförmigen Bereiche sind dann bereichsweise ausgestanzt und entsprechend ausgebuchtet.

Bei einer weiteren alternativen Ausgestaltung ist vorgesehen, dass das Anlasserelement scheibenförmig und das Mitnehmerelement ringförmig ausgebildet sind, wobei das Mitnehmerelement zwischen den schwingenförmigen Bereichen mit dem Anlasserelement verbunden ist. Das ringförmige Mitnehmerelement kann z.B. an den scheibenförmigen Bereich des Anlasserelementes angeschraubt sein.

Um die Flexibilität des Anlasserrades zu vergrößern, kann vorteilhaft vorgesehen sein, dass das Mitnehmerelement über seine Fläche eine Mehrzahl von Entlastungsbohrungen aufweist. Diese Entlastungsbohrungen sind vorteilhaft regelmäßig angeordnet und ein Teil derselben kann langlochartig ausgebildet sein.

Ferner hat es sich als vorteilhaft herausgestellt, dass zwischen den schwingenförmigen Bereichen in etwa auf demselben Radius wie die Befestigungsöffnungen Entlastungsbohrungen vorgesehen sind.

Die Erfindung ist nachstehend anhand der Zeichnung beispielhaft näher erläutert. Diese zeigt in:
- Fig. 1: in perspektivischer Darstellung ein Anlasserrad nach einer ersten Ausgestaltung,
- Fig. 2: eine Seitenansicht auf das Anlasserrad nach Fig. 1,
- Fig. 3: einen Schnitt gemäß der Linie III-III in Fig. 2,
- Fig. 4: ein vergrößertes Detail der Fig. 3,
- Fig. 5: eine Seitenansicht einer zweiten Ausführungsform eines Anlasserrades und in
- Fig. 6: einen Schnitt gemäß der Linie VI-VI in Fig. 5.

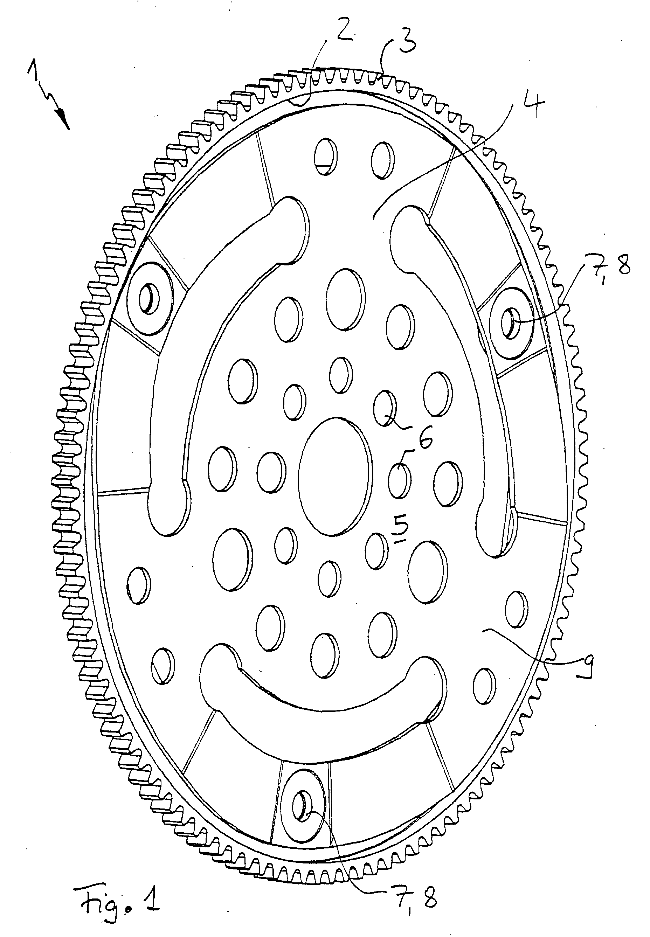

Ein erfindungsgemäßes Anlasserrad für ein Kraftfahrzeug oder dgl. ist in Fig. 1 allgemein mit 1 bezeichnet. Dieses Anlasserrad ist bei der Ausführungsform nach Fig. 1 bis 4 zweiteilig ausgebildet, es besteht aus einem ringförmigen Anlasserelement 2 mit Anlasserzahnkranz 3 und einer Mitnehmerscheibe 4. Dabei weist die Mitnehmerscheibe 4 einen inneren Nabenbereich 5 zur Befestigung an einer nicht dargestellten Motorwelle auf, wobei der Nabenbereich 5 dazu mit auf einem Kreisring angeordneten Befestigungsbohrungen 6 versehen ist.

An seinem äußeren Umfang ist die Mitnehmerscheibe 4 zur drehfesten Verbindung mit dem Anlasserelement 2 und zur drehfesten Verbindung mit einem nicht dargestellten Wandler eines Automatikgetriebes mit Verbindungsmitteln versehen, die vorzugsweise als Befestigungsöffnungen 7 ausgebildet sind. Das ringförmige Anlasserelement 2 weist an gleicher Stelle ebenfalls Befestigungsöffnungen 8 auf. Zur Vormontage beider Bauteile vor dem Einbau in ein Kraftfahrzeug sind die Mitnehmerscheibe 4 und das Anlasserelement 2 im Bereich der Befestigungsöffnungen 7, 8 vorzugsweise aneinander fixiert, wozu beispielsweise der Bohrungsrand 7a der Befestigungsöffnungen 7 der Mitnehmerscheibe 4 in die Befestigungsöffnungen 8 des Anlasserelementes 2 hinein umgeformt sind. Obwohl das Anlasserrad 1 somit aus zwei Bauteilen besteht, ist das Anlasserrad 1 bei der Montage am Fahrzeug als einzelnes Bauteil handhabbar, da die beiden Bauteile (Anlasserelement 2 und Mitnehmerscheibe 4) aneinander befestigt sind. Die endgültige Verbindung der beiden Bauteile erfolgt dann bei der Montage, indem Befestigungsschrauben durch die Befestigungsöffnungen 7, 8 hindurch mit dem Wandler verbunden werden.

Besonders wesentlich für das erfindungsgemäße Anlasserrad 1 ist vorgesehen, dass die Mitnehmerscheibe 4 angrenzend an den Anlasserzahnkranz 3 im Bereich der Verbindungsmittel 7, 8 zur Verbindung mit dem Wandler in axialer Richtung ausgebuchtete schwingenförmige Bereiche 9 aufweist. Damit ist die Mitnehmerscheibe 4 in ihren schwingenförmigen Bereichen 9 axial beabstandet zur ebenen Fläche des Anlasserelementes 2 angeordnet. Dies hat zur Folge, dass die Befestigungsebene zum Wandler axial beabstandet zur Befestigungsebene der Nabe angeordnet ist. Da die schwingenförmigen Bereiche 9 eine gewisse Flexibilität aufweisen, welche je nach Dimensionierung und Materialauswahl einstellbar sind, ist das Anlasserrad 1 auf diese Weise dazu geeignet, neben radialen Kräften vor allem auch axiale Kräfte in nennenswertem Umfang beschädigungsfrei aufnehmen zu können.

Um die Flexibilität des Anlasserrades 1 weiter zu erhöhen, weist die Mitnehmerscheibe 4 über ihrer Fläche eine Mehrzahl von Entlastungsbohrungen auf, die regelmäßig angeordnet sein können. So sind beispielsweise angrenzend an die Befestigungsbohrungen 6 erste Entlastungsbohrungen 11, 12 vorgesehen, an die radial außerhalb angrenzend langlochartige Bohrungen 13 anschließen. Wesentlich sind darüber hinaus zwischen den schwingenförmigen Bereichen 9 in etwa auf demselben Radius wie die Befestigungsöffnungen 7, 8 weitere Entlastungsbohrungen 14 vorgesehen.

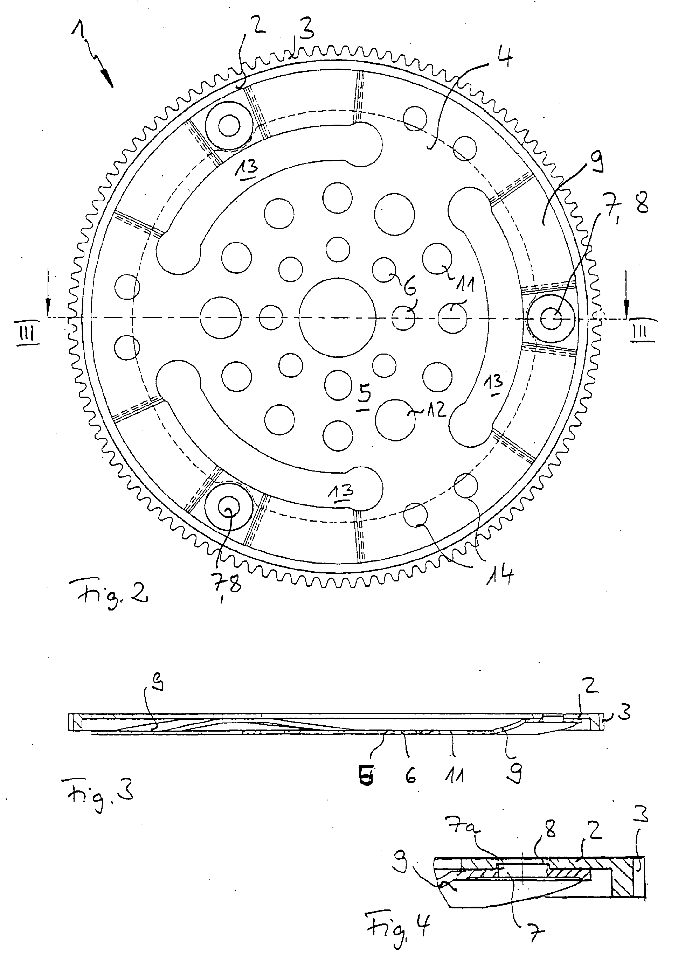

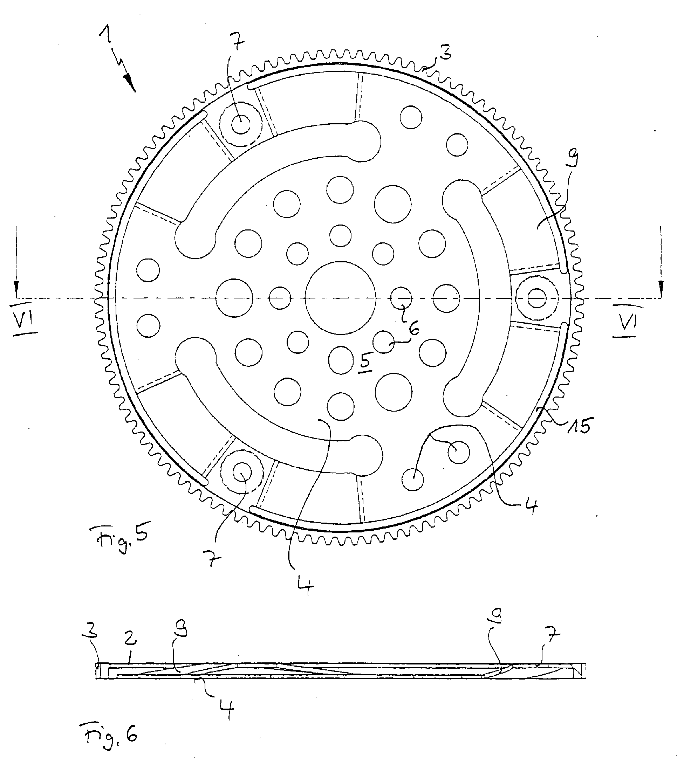

Die Ausführungsform nach Fig. 5 und 6 unterscheidet sich von derjenigen nach Fig. 1 bis 4 dadurch, dass das Anlasserrad 1 einteilig ausgebildet ist, d.h. das Anlasserelement 2 ist integraler Bestandteil des scheibenförmigen Mitnehmerelementes 4. Zur Befestigung am Wandler sind dabei im scheibenförmigen Mitnehmerelement 4 im radial äußeren Bereich innerhalb des Zahnkranzes 3 Befestigungsöffnungen 7 vorgesehen, welche wiederum in schwingenförmigen Bereichen 9 angeordnet sind, welche bei dieser Ausführungsform bereichsweise aus dem Mitnehmerelement 4 ausgestanzt und entsprechend ausgeformt sind. Diese ausgestanzten Bereiche sind mit dem Bezugszeichen 15 bezeichnet.

Ansonsten unterscheidet sich die Ausführungsform nach Fig. 5 und 6 nicht von der Ausführungsform nach Fig. 1 bis 4.

Natürlich ist die Erfindung nicht auf die dargestellten Ausführungsbeispiele beschränkt. Weitere Ausgestaltungen sind möglich, ohne den Grundgedanken zu verlassen. So kann z.B. der Nabenbereich 5 mit einer zusätzlichen Wandverstärkung versehen sein, falls dies erforderlich ist.

## Patentansprüche

1. Anlasserrad für ein Kraftfahrzeug oder dgl., welches drehfest mit einer Motorwelle verbunden ist, bestehend aus einem Anlasserelement, welchem ein äußerer Zahnkranz zugeordnet ist, und einem Mitnehmerelement, das einerseits mit dem Anlasserelement und andererseits mit einem Wandler eines Automatikgetriebes verbunden ist,
**dadurch gekennzeichnet,**
**dass** das Mitnehmerelement (4) angrenzend an den Anlasserzahnkranz (3) im Bereich der Verbindungselemente (7,8) mit dem Wandler in axialer Richtung ausgebuchtete, schwingenförmige Bereiche (9) aufweist.

2. Anlasserrad nach Anspruch 1,
**dadurch gekennzeichnet,**
**dass** das ringförmige Anlasserelement (2) und die Mitnehmerscheibe (4) als Verbindungsmittel Befestigungsöffnungen (7,8) zur gemeinsamen Befestigung am Wandler aufweisen.

3. Anlasserrad nach Anspruch 2,
**dadurch gekennzeichnet,**
**dass** das Anlasserelement (2) und die Mitnehmerscheibe (4) im Bereich der Befestigungsöffnungen (7,8) aneinander fixiert (7a) sind.

4. Anlasserrad nach Anspruch 1,
**dadurch gekennzeichnet,**
**dass** das Anlasserelement (2) als integraler Bestandteil des Mitnehmerelementes (4) ausgebildet ist.

5. Anlasserrad nach Anspruch 1,
**dadurch gekennzeichnet,**
**dass** das Anlasserelement (2) scheibenförmig und das Mitnehmerelement (4) ringförmig ausgebildet sind, wobei das Mitnehmerelement (4) zwischen den schwingenförmigen Bereichen (9) mit dem Anlasserelement (2) verbunden ist.

6. Anlasserrad nach Anspruch 1 oder einem der folgenden,
**dadurch gekennzeichnet,**
**dass** das Mitnehmerelement (4) über seiner Fläche eine Mehrzahl von Entlastungsbohrungen (11,12,13,14) aufweist.

7. Anlasserrad nach Anspruch 6,
**dadurch gekennzeichnet,**
**dass** die Entlastungsbohrungen (11,12,13,14) regelmäßig angeordnet sind.

8. Anlasserrad nach Anspruch 7,
**dadurch gekennzeichnet,**
**dass** zumindest ein Teil der Entlastungsbohrungen (13) langlochartig ausgebildet sind.

9. Anlasserrad nach Anspruch 6 oder einem der folgenden,
**dadurch gekennzeichnet,**
**dass** zwischen den schwingenförmigen Bereichen (9) in etwa auf demselben Radius wie die Befestigungsöffnungen (7) Entlastungsbohrungen (14) vorgesehen sind.
